# EUROPÄISCHE PATENTSCHRIFT

(11) **EP 0 828 690 B1**
(45) Veröffentlichungstag und Bekanntmachung des Hinweises auf die Patenterteilung: **02.08.2000**
(21) Anmeldenummer: 96916060.5
(22) Anmeldetag: 14.05.1996
(51) Int. Cl.: C01G 51/06, C01G 51/04

(54) **SPHÄROIDISCH AGGLOMERIERTES BASISCHES KOBALT(II)CARBONAT UND SPHÄROIDISCH AGGLOMERIERTES KOBALT(II)HYDROXID, VERFAHREN ZU IHRER HERSTELLUNG SOWIE DEREN VERWENDUNG**
SPHEROIDALLY AGGLOMERATED BASIC COBALT (II) CARBONATE AND SPHEROIDALLY AGGLOMERATED COBALT (II) HYDROXIDE, PROCESS FOR THEIR PRODUCTION AND THEIR USE
CARBONATE DE COBALT (II) BASIQUE AGGLOMERE SPHEROIDAL ET HYDROXYDE DE COBALT (II) AGGLOMERE SPHEROIDAL, LEUR PROCEDE DE FABRICATION ET LEUR APPLICATION

(30) Priorität: 26.05.1995 DE 19519326
(43) Veröffentlichungstag der Anmeldung: 18.03.1998
(73) Patentinhaber: H.C. Starck GmbH & Co. KG, 38642 Goslar (DE)
(72) Erfinder: GÖRGE, Astrid, D-38640 Goslar (DE); MEESE-MARKTSCHEFFEL, Juliane, D-38642 Goslar (DE); NAUMANN, Dirk, D-38667 Bad Harzburg (DE); OLBRICH, Armin, D-38723 Seesen (DE); SCHRUMPF, Frank, D-38640 Goslar (DE)
(74) Vertreter: Drope, Rüdiger, Dr.
(86) Internationale Anmeldenummer: EP9602050
(87) Internationale Veröffentlichungsnummer: WO9637436

(56) Entgegenhaltungen:
- US-A- 5 240 692
- CHEMICAL ABSTRACTS, vol. 92, no. 8, 25.Februar 1980 Columbus, Ohio, US; abstract no. 61186, SUMITOMO: "highly active basic cobalt carbonate" XP002012046 & JP,A,54 131 597 (SUMITOMO)
- DATABASE WPI Derwent Publications Ltd., London, GB; AN 78-27542 XP002012047 & JP,A,53 021 099 (AGENCY OF IND SCI TECH) , 27.Februar 1978
- DATABASE WPI Section Ch, Week 7748 Derwent Publications Ltd., London, GB; Class E31, AN 77-86019Y XP002012048 & SU,A,548 570 (ALIMOVA L N) , 19.April 1977
- DATABASE WPI Section Ch, Week 9215 Derwent Publications Ltd., London, GB; Class E31, AN 92-118237 XP002012049 & JP,A,04 059 622 (SUMITOMO METAL IND LTD) , 26.Februar 1992

## Beschreibung

Die vorliegende Erfindung betrifft aus feinen Primärteilchen agglomeriertes basisches Kobalt(II)carbonat der allgemeinen Zusammensetzung Co[(OH)₂]ₐ[CO₃]₁₋ₐ mit 0,1 ≤ a ≤ 0,9, sphäroidisches Kobalt(II)hydroxid, Verfahren zu ihrer Herstellung sowie deren Verwendung.

Für eine Reihe industrieller Anwendungen wird phasenreines Kobalt(II)hydroxid benötigt. So kann es zum Beispiel direkt oder nach vorangegangener Kalzination zu Kobalt(II)oxid als Komponente in der positiven Elektrode von modernen Hochleistungssekundärbatterien auf Basis Nickel/Cadmium oder Nickel/Metallhydrid eingesetzt werden.

Über intermediär entstehende Kobaltate(II), die im alkalischen Elektrolyten der Batterie (30 Gew.-% KOH) löslich sind, wird es gleichmäßig in der Elektrodenmasse verteilt und dort durch Oxidation in den sogenannten Formierzyklen als elektrisch leitfähige CoOOH-Schicht auf den Nickelhydroxidpartikeln abgeschieden. Im Ausgangsmaterial vorhandene Kobalt(III)-Anteile bilden keine löslichen Kobaltäte und sind daher nicht nutzbar.

Der Einsatz von Kobaltverbindungen in alkalischen Sekundärbatterien auf Basis Nickel/Cadmium oder Nickel/Metallhydrid ist in der EP-A 353837 offenbart. Reine Kobalt(II)oxide finden zudem Anwendung in der Elektronik und Katalysatortechnologie.

Kobalt(II)hydroxid oder -carbonat dienen ebenso zur Herstellung weiterer Kobaltverbindungen. Hierzu zählen u.a. die Kobaltsalze schwacher Säuren, die sogenannten Metallseifen. Diese werden nicht nur als Sikkative für Lacke und Firnisse eingesetzt, sie finden ebenso wie Kobalt(II)oxid ihre Anwendung als Katalysator.

Als Beispiel sei der katalytische Einsatz von Kobalt(II)acetat bei der Herstellung von Adipinsäure genannt.

Kobalt(II)hydroxid läßt sich durch Ausfällen aus wäßrigen Kobalt(II)-Salzlösungen mit Alkalilaugen herstellen. Die entstehenden Niederschläge besitzen in der Regel eine gelartige Konsistenz und sind schlecht filtrierbar und somit schwer neutralsalzfrei zu waschen. Außerdem sind sie im alkalischen Medium sehr oxidationsempfindlich, so daß die Filtrations- und Waschprozesse unter sorgfältigem Ausschluß von Luftsauerstoff durchgeführt werden müssen.

Die Ursache der schlechten Filtrierbarkeit ist in der feinen Struktur der Primärkristalle und deren unregelmäßiger Agglomeration begründet. Feine Primärpartikel sind jedoch für die beschriebenen Anwendungen oft erwünscht. Zum einen lösen sich feine Primärpartikel schneller in Säuren, zum anderen führt die Kalzination oder Reduktion solcher Kobalt(II)hydroxide zu entsprechend feinen Primärpartikeln im Kobalt(II)oxid oder Kobaltmetallpulver.

Entsprechendes Kobalt(II)hydroxid mit feiner Primärteilchenstruktur läßt sich nach konventionellen Methoden aber nur mit erheblichem Aufwand herstellen, so daß eine große Diskrepanz zwischen dem geforderten Eigenschaftsprofil und einer technisch stabilen, reproduzierbaren und wirtschaftlichen Herstellungsmethode besteht.

Das oben beschriebene schlechte Filtrations- und Waschverhalten tritt bei sphärisch agglomerierten Primärteilchen nicht auf. So weist zum Beispiel sphärisches Nickelhydroxid, welches Verwendung in modernen alkalischen Sekundärbatterien findet, ein exzellentes Filtrations- und Waschverhalten auf.

Die Herstellung von sphärischem Nickelhydroxid durch Fällung aus wäßriger Nickelsalzlösung mit Alkalilaugen in Gegenwart von Ammoniak wird in der EP-A 353 837 offenbart. Dieses Verfahren läßt sich prinzipiell auch auf das Element Kobalt übertragen. Erschwerend gegenüber Nickel wirkt sich dabei jedoch die allgemein bekannte Tatsache aus, daß Kobalt(II) im komplexierten Zustand leicht in die dreiwertige Stufe oxidiert wird. Noch mehr als bei der konventionellen Fällung ist daher auf den strikten Ausschluß von Luftsauerstoff zu achten. Ein allgemeiner Nachteil dieses Verfahrens, der sowohl für Nickel als auch für Kobalt zutrifft, ist die Tatsache, daß die Filtrate Ammoniak und komplexierte Metallkationen enthalten. Eine aufwendige Abwasserbehandlung ist deshalb unumgänglich.

Aufgabe der vorliegenden Erfindung war es daher, ein Kobalt(II)hydroxid bereitzustellen, welches die beschriebenen Nachteile des Standes der Technik nicht aufweist und in einem wirtschaftlichen Verfahren reproduzierbar herzustellen ist.

Es wurde nun gefunden, daß in einem technisch einfachen und wirtschaftlichen Prozeß, sphäroidisch agglomerierte Kobalt(II)carbonate mit variabel einstellbaren Eigenschaften, wie z.B. mittlerer Agglomeratdurchmesser und spezifische Oberfläche, hergestellt werden können, die anschließend in einer Reihe chemischer Reaktionen unter Erhalt der Sekundärmorphologie in andere Verbindungen, z. B. sphäroidisch agglomeriertes Kobalt(II)hydroxid, umgewandelt werden können.

Bei diesem Kobaltcarbonat handelt es sich um ein aus feinen Primärteilchen agglomeriertes basisches Kobalt(II)carbonat der allgemeinen Zusammensetzung Co[(OH)₂]ₐ[CO₃]₁₋ₐ mit 0,1 ≤ a ≤ 0,9, wobei die Agglomerate einen sphäroidischen Habitus aufweisen und der mittlere Agglomeratdurchmesser 3 bis 50 µm beträgt. Bevorzugt beträgt dabei der Agglomeratdurchmesser 5 - 20 µm. Die erfindungsgemäßen basischen Kobalt(II)carbonat-Agglomerate weisen bevorzugt Klopfdichten von ≥ 1,6 g/cm³ und Schüttdichten von ≥ 1,2 g/cm³ auf.

Gegenstand dieser Erfindung ist auch ein Verfahren zur Herstellung der erfindungsgemäßen Kobalt(II)carbonat-Agglomerate. Dieses ist dadurch gekennzeichnet, daß wäßrige Lösungen von Kobaltsalzen der allgemeinen Formel CoX₂, wobei X = Cl⁻, NO₃⁻ und/oder ½ SO₄²⁻ bedeutet, mit wäßrigen Lösungen oder Suspensionen von Alkali- und/oder Ammoniumcarbonaten und/oder Hydrogencarbonaten bei Temperaturen zwischen 40 und 100 °C, vorzugsweise 60 bis 90 °C, umgesetzt und die entstehenden basischen Kobalt(II)carbonat-Agglomerate anschließend abfiltriert und neutralsalzfrei gewaschen werden.

Das erfindungsgemäße Verfahren wird bevorzugt sowohl aus ökologischen als auch ökonomischen Gründen mit Alkalicarbonaten durchgeführt. Um jedoch besonders alkaliarme Produkte herzustellen, kann es auch unter Einsatz von Ammoniumcarbonaten durchgeführt werden.

Bevorzugt wird dieses Verfahren unter intensiver Durchmischung der Reaktanden kontinuierlich durchgeführt. Hierbei sollten die Verweilzeiten bevorzugt zwischen 0,5 und 10 h, besonders bevorzugt zwischen 1 und 5 h betragen.

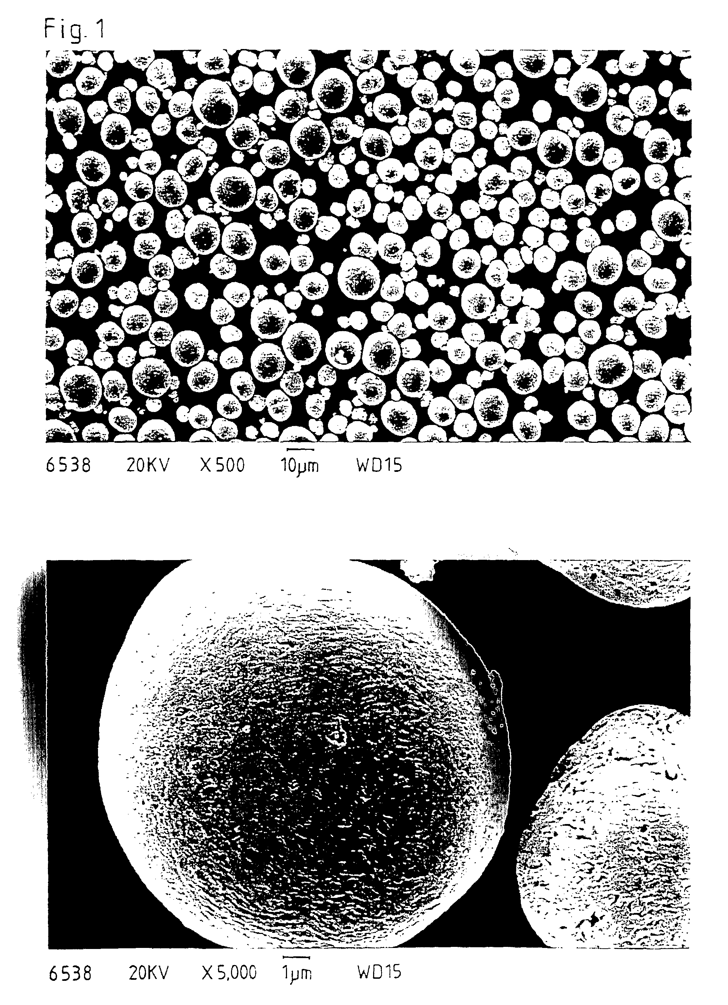

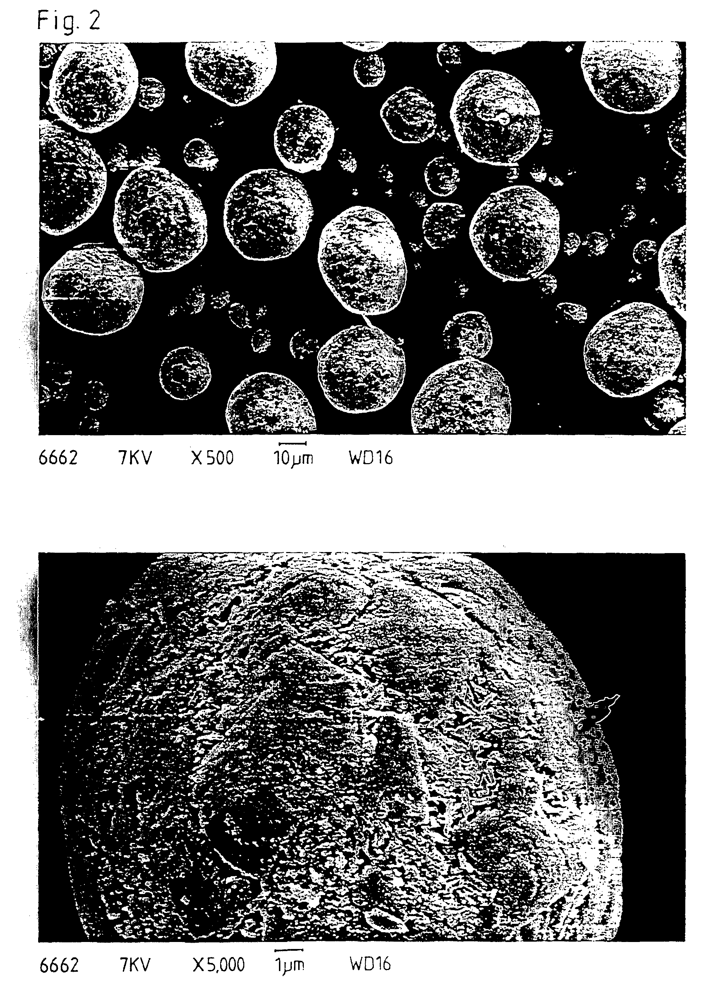

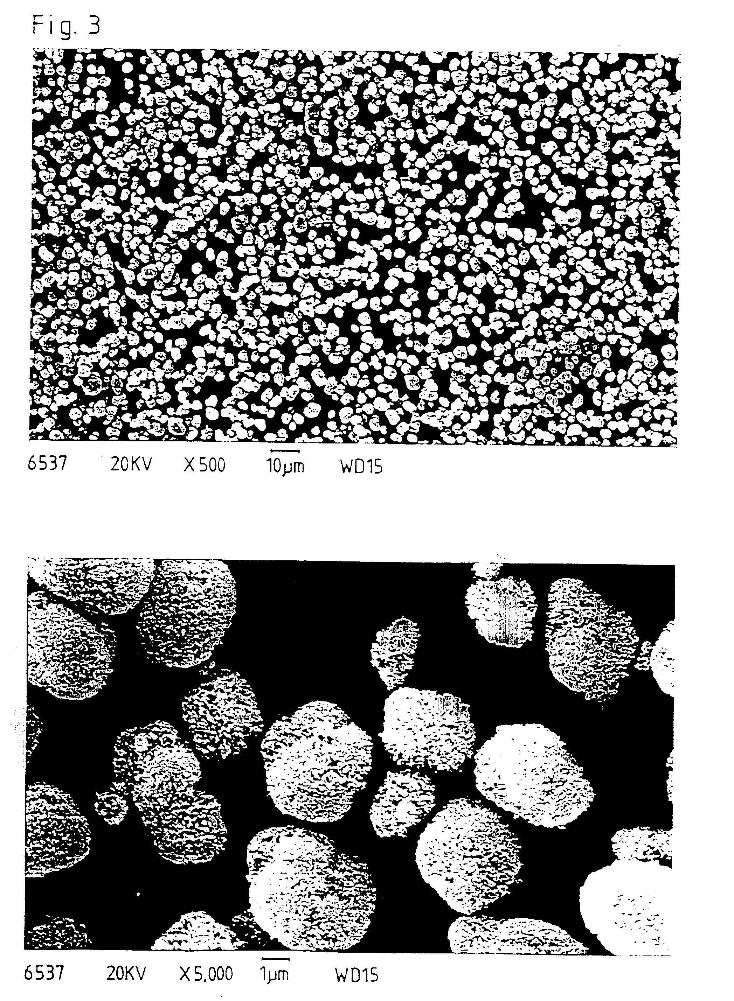

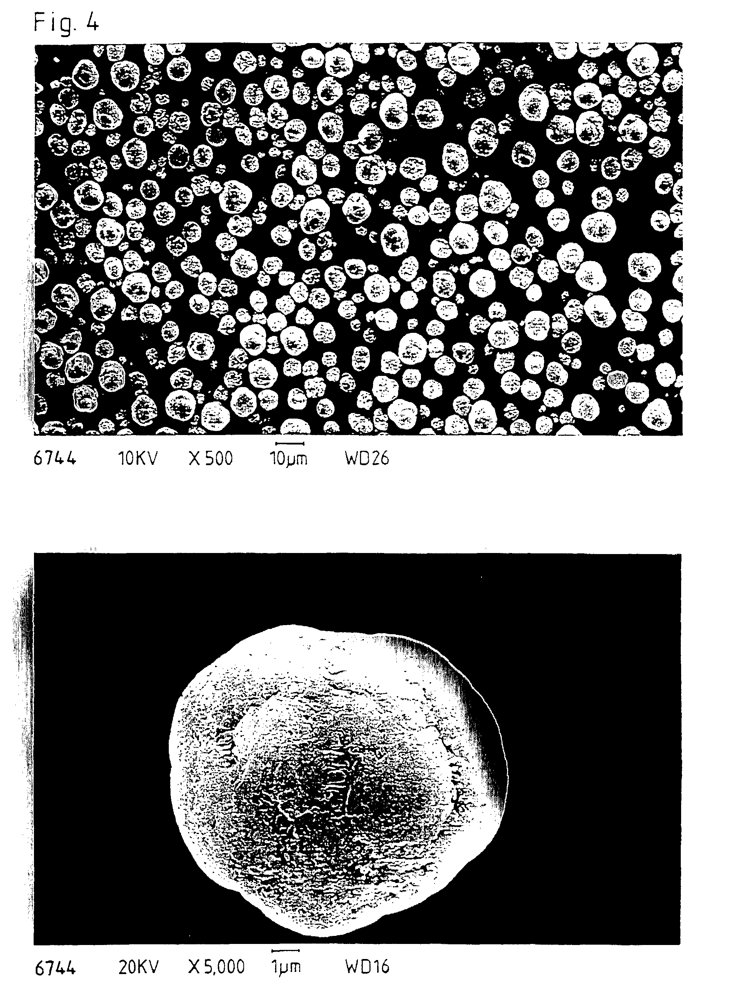

In Abhängigkeit von den Verfahrensparametern, insbesondere Temperatur, Konzentration, pH-Wert, Verweilzeit und Rührintensität lassen sich die chemische Zusammensetzung, die Größe der Primärteilchen, sowie die Größe und Verteilung der Sekundärteilchen in weiten Grenzen einstellen, wie in den Beispielen 1 bis 4 und Fig. 1 bis 4 weiter beschrieben ist.

Das erfindungsgemäße Verfahren zeichnet sich durch eine einfache Verfahrensführung aus. Die erfindungsgemäßen basischen Kobalt(II)carbonate sind unempfindlich gegenüber einer Oxidation durch Luftsauerstoff, was eine einfache Handhabung erlaubt.

Überraschenderweise hat sich herausgestellt, daß die erfindungsgemäßen basischen Kobalt(II)carbonat-Agglomerate in hochkonzentrierter Suspension mit Alkalilaugen ebenfalls unter Erhalt der sphäroidischen Sekundärmorphologie zu phasenreinen Kobalt(II)hydroxiden umgesetzt werden können, was näher in den Beispielen 5 und 6 beschrieben ist.

Dies kann in einem technisch einfachen Batch-Prozeß geschehen. Verbunden mit einem guten Sedimentations-, Filtrations- und Waschverhalten ist so eine bestmögliche Abschirmung vor Luftsauerstoff möglich und das gesamte Verfahren ohne hohen Aufwand auch im technischen Maßstab wirtschaftlich durchführbar.

Gegenstand dieser Erfindung ist somit auch ein Verfahren zur Herstellung von agglomeriertem Kobalt(II)hydroxid, wobei die erfindungsgemäßen basischen Kobalt(II)carbonat-Agglomerate mit wäßrigen Alkalilaugen und/oder Ammoniak in Suspension umgesetzt werden.

Die nach dem erfindungsgemäßen Verfahren erhältlichen Kobalt(II)hydroxid-Agglomerate sind dadurch gekennzeichnet, daß sie aus sphäroidisch agglomerierten, kantigen, plättchenförmigen Primärteilchen bestehen, die durchschnittliche Durchmesser-zu Stärken-Verhältnisse zwischen 3 und 15 aufweisen.

Die sphäroidischen Agglomerate weisen einen mittleren Durchmesser von 3 - 50 µm, bevorzugt von 5 bis 20 µm, auf. Ihre Klopfdichten betragen vorzugsweise ≥ 1 g/cm³.

Aufgrund ihrer speziellen Eigenschaften, wie hoher Schüttdichten, definierter und gleichmäßiger Kornverteilungen, Fließfähigkeit usw. sind die erfindungsgemäßen Kobalt(II)carbonate und Kobalt(II)hydroxide technisch interessante Alternativen zu den entsprechenden konventionell hergestellten Kobaltverbindungen mit unregelmäßiger, nicht sphäroidischer Sekundärstruktur.

Die erfindungsgemäßen basischen Kobalt(II)carbonat-Agglomerate sind geeignete Ausgangsverbindungen für verschiedene Anwendungen, z. B. die Herstellung von Kobalt(II)salzen oder zur Herstellung von phasenreinem Kobalt(II)oxid durch Kalzination, welche unter Erhalt der Sekundärmorphologie abläuft.

Gegenstand dieser Erfindung ist somit die Verwendung der erfindungsgemäßen basischen Kobalt(II)carbonat-Agglomerate zur Herstellung von sphäroidischem, fließfähigem Kobalt(II)oxid sowie höherer Oxide durch Kalzination unter Schutzgas und/oder Luft. Auch eignen sich die Kobaltcarbonate als Ausgangsverbindung zur Herstellung weiterer Kobaltverbindungen, die sonst nur schwer oder gar nicht in kompakt agglomerierter Form zu erhalten sind.

Wie bereits eingangs erwähnt, besitzen eine Reihe von Kobalt(II)salzen schwacher Säuren, die nicht durch direkte Umsetzung des metallischen Kobalts mit den entsprechenden Säuren gewonnen werden können, große technische Bedeutung. So gewinnt man beispielsweise Kobalt(II)acetat üblicherweise durch Umsetzung konventioneller Kobaltcarbonatfällungen mit Essigsäure. Dabei werden diese Fällungen in der Kälte durchgeführt, wobei hoch kristallwasserhaltige, stäbchenförmige, kaum sedimentierende Niederschläge entstehen.

Das erfindungsgemäße basische Kobalt(II)carbonat weist die eben beschriebenen Nachteile nicht auf, besitzt aber trotzdem eine hohe Reaktivität gegenüber beispielsweise Essigsäure, so daß es leicht in wäßriger Essigsäure gelöst werden und aus der Lösung durch Kristallisation Kobalt(II)acetat gewonnen werden kann.

Es wurde nun gefunden, daß auch eine heterogene Umsetzung des erfindungsgemäßen sphäroidisch agglomerierten basischen Kobalt(II)carbonates mit Eisessig möglich ist. Hierbei entstehen nadelförmige, gleichmäßige Kristalle von 10 - 20 µm Länge und ca. 2 µm Durchmesser. Diese Umsetzung sollte mit einem Überschuß an Essigsäure durchgeführt werden, um den Festkörper hinreichend gut suspendieren zu können. Im technischen Prozeß wird diese Essigsäure jedoch sinnvoll im Kreislauf gefahren, so daß das beschriebene Verfahren sich auch durch Wirtschaftlichkeit auszeichnet. Als positiver Nebeneffekt ist dabei die Tatsache zu nennen, daß letzte Verunreinigungen im basischen Kobaltcarbonat nach der Umsetzung in der Mutterlauge (Kreislauflauge) verbleiben und aus dieser, je nach technischer Realisierung des Kreislaufkonzeptes, abgetrennt werden können. Man erhält so also ultrareines Kobalt(II)acetat, welches ebenfalls eine Quelle für hochreine Kobalt(II)verbindungen darstellt.

Ein weiteres technisch wichtiges Kobalt(II)salz einer schwachen Säure ist Kobalt(II)phosphat. Das Oktahydrat Co₃(PO₄)₂ · 8 H₂O ist ein rosafarbenes Pulver und wird zur Blaufärbung von Porzellan, Glas und zur Herstellung von Emails, Glasuren und Pigmenten verwendet.

In kompakt agglomerierter Form kann es durch Umsetzung des erfindungsgemäßen basischen Kobalt(II)carbonates mit wäßriger Phosphorsäure erhalten werden, wie es in Beispiel 11 beschrieben ist.

Auf analoge Weise läßt sich die Umsetzung mit wäßrigen Oxalsäurelösungen unter Erhalt der agglomerierten Sekundärmorphologie zu Kobalt(II)oxalat durchführen, welches wiederum zur Herstellung von Kobaltmetallpulvern eingesetzt werden kann.

Die Kalzination agglomerierten Kobalt(II)oxalates, gegebenenfalls unterstützt oder modifiziert durch gasförmige Reduktionsmittel wie Wasserstoff, Kohlenmonoxid oder Distickstoffoxid, liefert dann Kobaltmetallpulver, die ebenfalls eine agglomerierte Sekundärstruktur aufweisen, aber aus kleinen Primärpartikeln aufgebaut sind und daher technisch bedeutsam sein könnten.

Wie schon für das basische Kobaltcarbonat beschrieben, kann auch das erfindungsgemäße Kobalt(II)hydroxid zur Herstellung von Kobalt(II)salzen verwendet werden oder unter Erhalt der sphäroidischen Sekundärstruktur weiter zu phasenreinem Kobalt(II)oxid kalziniert werden. Gegenstand dieser Erfindung ist somit auch die Verwendung des erfindungsgemäßen Kobalt(II)hydroxides zur Herstellung von reinen Kobalt(II)-Salzen für den Einsatz in Haftvermittlern und Katalysatoren zur Herstellung von sphäroidischem, fließfähigem Kobalt(II)oxid oder höherer Oxide, sowie als Komponente der Nickelhydroxidelektrode in alkalischen Sekundärzellen.

Gegenstand dieser Erfindung ist auch die Verwendung der erfindungsgemäßen basischen Kobalt(II)carbonat-Agglomerate und/oder der Kobalt(II)hydroxide zur Herstellung von Kobaltpigmenten.

Ohne einschränkend zu wirken, sind in den folgenden Beispielen die Herstellung der erfindungsgemäßen sphäroidisch agglomerierten basischen Kobalt(II)carbonate und Kobalt(II)hydroxide sowie deren Weiterverarbeitung zu diversen Folgeprodukten beschrieben.

### Beispiele

### Beispiele 1 - 4

### Herstellung von basischem Kobalt(II)carbonat

Die Herstellung der erfindungsgemäßen basischen Kobalt(II)carbonate in den Beispielen 1 bis 4 wurde in einem kontinuierlich betriebenen Durchflußreaktor mit Radialflußrührer unter gleichzeitiger Zugabe wäßriger Kobaltchloridlösungen und wäßriger Alkalihydrogencarbonat- oder Alkalicarbonatlösungen durchgeführt. Die Dosierung der Lösungen erfolgte mit sehr genau und konstant arbeitenden Taumelkolbenpumpen. Die Temperaturen wurden über einen regelbaren Thermostaten während der gesamten Reaktionsdauer konstant gehalten.

Proben für die Aufarbeitung und Weiterverarbeitung zu Folgeprodukten wurden entnommen, nachdem der Reaktor seinen stationären Zustand erreicht hatte.

Die Aufarbeitung erfolgte in der Weise, daß man die Feststoffe zunächst sedimentieren ließ und etwa 80 % der Mutterlauge durch Dekantieren abtrennte. Die eingedickte Suspension wurde auf eine Filternutsche überführt, der entstandene Niederschlag abfiltriert und mit ca. 10 l Waschwasser pro kg Kobalt bei Reaktionstemperatur gewaschen und der Filterkuchen anschließend bei 80 °C bis zur Gewichtskonstanz im Trockenschrank getrocknet.

Die Reaktionsparameter, sowie charakteristische Produkteigenschaften sind in Tabelle 1 aufgeführt.

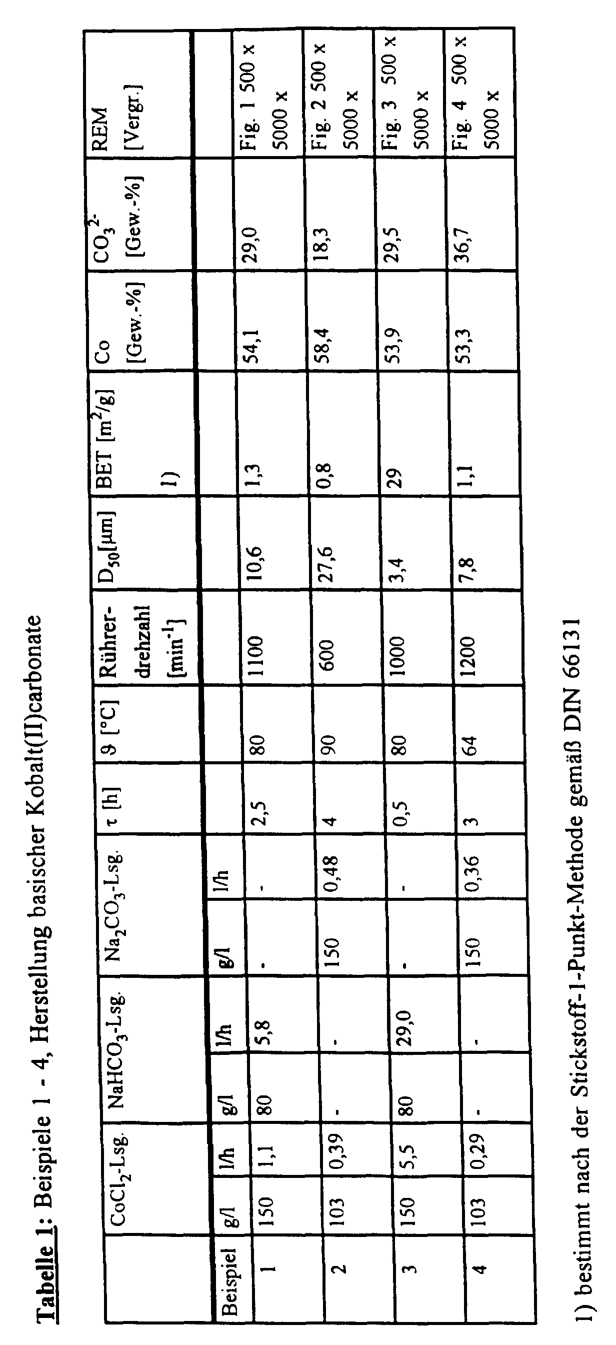

### Beispiel 5

### Herstellung von sphäroidisch agglomeriertem Kobalt(II)hydroxid

100 g basischen Kobalt(II)carbonates aus Beispiel 4 wurden in 200 ml Wasser aufgeschlämmt und mit 80 g NaOH, gelöst in 600 ml Wasser, versetzt. Die Suspension wurde dann im Rotationsverdampfer unter Argon 1 h auf 85 °C erhitzt, der Feststoff abgenutscht und mit 2 l Wasser nachgewaschen. Der Filterkuchen wurde im Vakuumexsikkator über KOH bis zur Gewichtskonstanz getrocknet.

Man erhielt 85,7 g rosafarbenen, nach Röntgenbeugungsanalyse phasenreinen Kobalt(II)hydroxids. Der Kobaltgehalt wurde zu 61,7 Gew-% bestimmt.

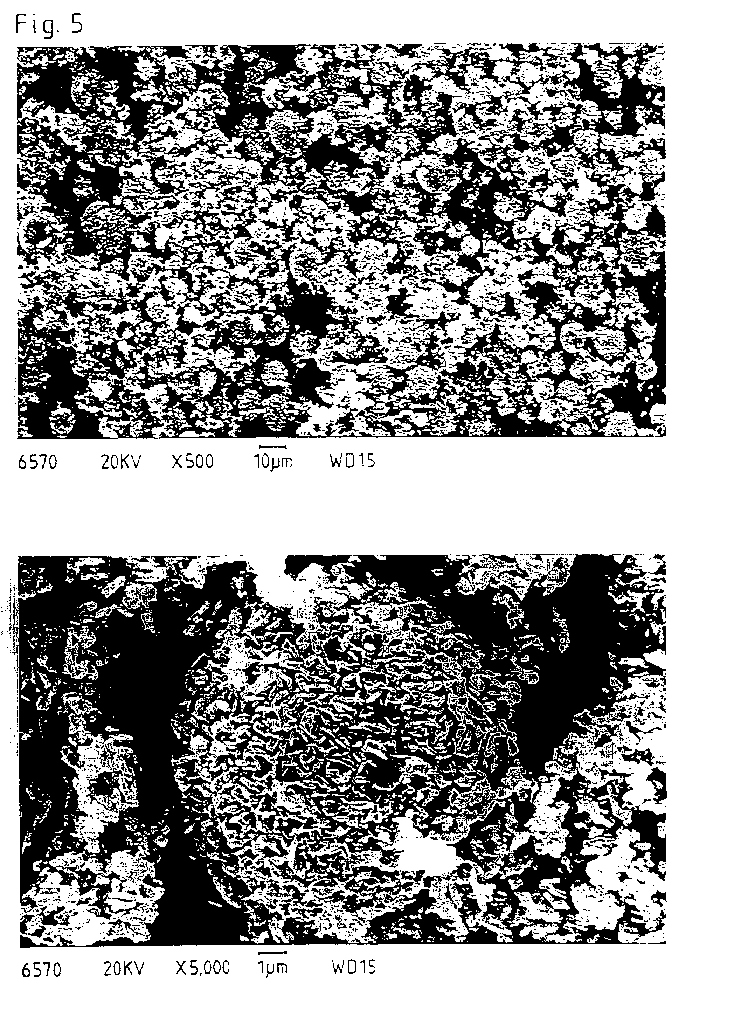

Der Na-Gehalt betrug 85 ppm. Der Carbonatgehalt wurde zu 0,2 % bestimmt. Die REM-Aufnahme (Fig. 5) zeigt neben geringen Mengen Feinanteils, daß die sphäroidische Sekundärstruktur des Ausgangsmaterials überwiegend erhalten bleibt. Die sphäroidischen Agglomerate sind aus hexagonalen Blättchen aufgebaut, welche Durchmesser von ca. 1 µm und Stärken von 0,1 bis 0,2 µm aufweisen.

### Beispiel 6

### Herstellung von sphäroidisch agglomeriertem Kobalt(II)hydroxid

2 kg basischen Kobaltcarbonates aus Beispiel 1 wurden in einem Rührreaktor unter Argon in 5 l Wasser aufgeschlämmt. Die Suspension wurde mit 800 g NaOH, gelöst in 3 l Wasser, versetzt und unter langsamem Rühren 2 h auf 60 °C erhitzt. Anschließend wurde filtriert und mit 40 l 60 °C warmen Wassers nachgewaschen. Der Filterkuchen wurde 12 h im Vakuumtrockenschrank bei 40 °C vorgetrocknet und anschließend im Trockenschrank bei 60 °C bis zur Gewichtskonstanz nachgetrocknet. Man erhielt 1,72 kg rosafarbenen, nach Röntgenbeugungsanalyse, phasenreinen Kobalt(II)hydroxids.

Der Kobaltgehalt des Materials wurde zu 62,1 Gew.-% bestimmt. Die Chlorid- und Natriumgehalte betrugen < 100 ppm. Der Restgehalt an Carbonat wurde zu 0,2 Gew.-% bestimmt.

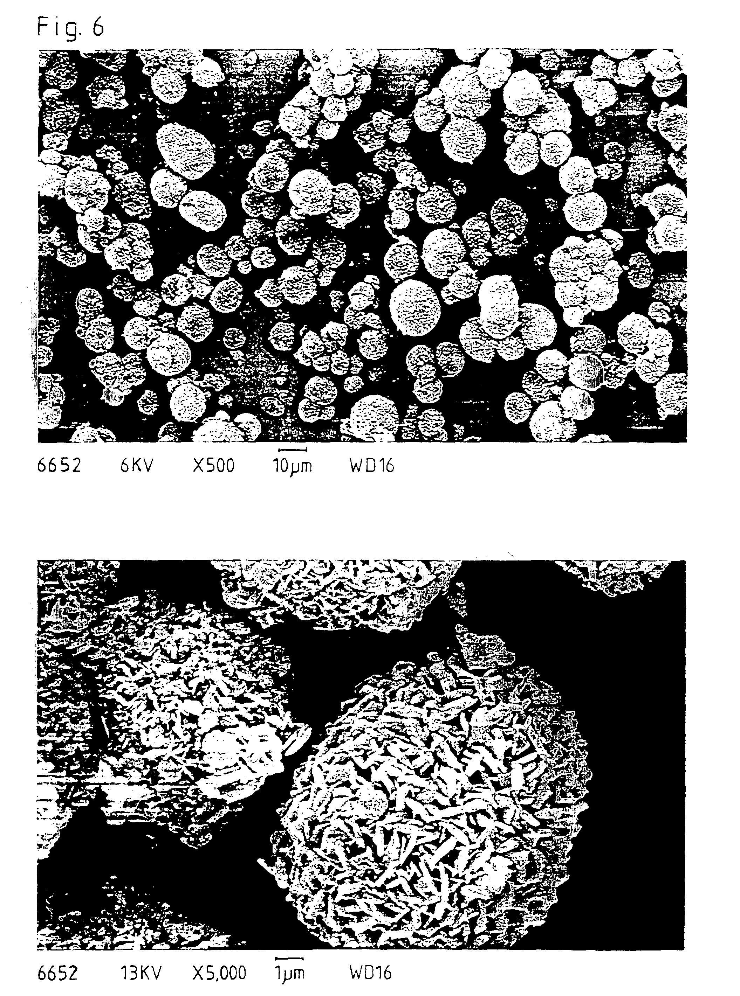

Das erhaltene sphäroidisch agglomerierte Kobalt(II)hydroxid war ausgesprochen gut fließfähig. Die REM-Aufnahmen (Fig. 6) zeigen, daß die sphäroidische Struktur des Ausgangsmaterials nahezu vollständig erhalten blieb.

### Beispiel 7

### Herstellung von sphäroidisch agglomeriertem Kobalt(II)oxid aus basischem Kobalt(II)carbonat

500 g basischen Kobalt(II)carbonates aus Beispiel 1 wurden im Quarzschiffchen unter Argon 2 h bei 650 °C kalziniert. Als Auswaage erhielt man 342 g hellbraunen, nach Röntgenbeugungsanalyse phasenreinen Kobalt(II)oxids.

Der Kobaltgehalt wurde zu 78,58 Gew.-% bestimmt. Die REM-Aufnahme zeigt, daß die sphäroidische Sekundärmorphologie des Ausgangsmaterials bei der Kalzination erhalten blieb.

### Beispiel 8

### Herstellung von sphäroidisch agglomeriertem Kobalt(II)oxid aus Kobalt(II)hydroxid

500 g sphäroidischen Kobalt(II)hydroxides aus Beispiel 6, wurden im Quarzschiffchen 2 h bei 650 °C unter Argon kalziniert.

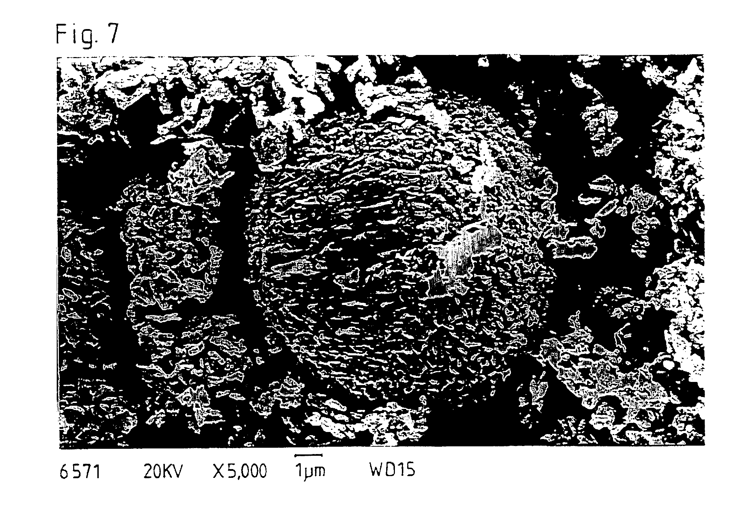

Als Ausbeute erhielt man 392 g hellbraunen, fließfähigen, nach Röntgenbeugungsanalyse phasenreinen, Kobalt(II)oxids. Der Kobaltgehalt des Materials wurde zu 78,57 Gew.-% bestimmt. Die sphäroidische Sekundärstruktur des Ausgangsmaterials blieb, wie die REM-Aufnahme (Fig. 7) zeigt, erhalten.

### Beispiel 9

### Umsetzung von sphäroidisch agglomeriertem basischen Kobalt(II)carbonat mit_Essigsäure

100 g basischen Kobalt(II)carbonates aus Beispiel 1 wurden in einem 1-1-Kolben mit Rückflußkühler und KPG-Rührer unter Argon in 500 ml Eisessig aufgeschlämmt. Anschließend wurde langsam die Temperatur der Mischung erhöht. Ab ca. 45 °C war das Anspringen der Reaktion an einer sich schnell verstärkenden CO₂-Entwicklung zu beobachten. Die Reaktionstemperatur wurde 1 h bei 80 °C belassen und danach noch 1 h unter Rückfluß erhitzt, bis keine CO₂-Entwicklung mehr zu beobachten war. Danach wurde die Reaktionsmischung wie folgt aufgearbeitet:

Ein aliquoter Anteil von 100 ml der Suspension wurde mit 200 ml Wasser versetzt und 5 min. bei 80 °C gerührt. Es bildete sich eine dunkelrote Lösung, aus der rote Kristalle von reinem Kobalt(II)acetat-tetrahydrat isoliert wurden.

Die restliche Suspension wurde über eine Filternutsche abfiltriert und 15 min. trockengesaugt. Der stichfeste bis krümelige Filterkuchen wurde bei 75 °C im Trockenschrank bis zur Gewichtskonstanz getrocknet. Man erhielt 65,3 g rosafarbenes, phasenreines Kobalt(II)acetat. Der Kobaltgehalt wurde zu 27,7 Gew.-% bestimmt.

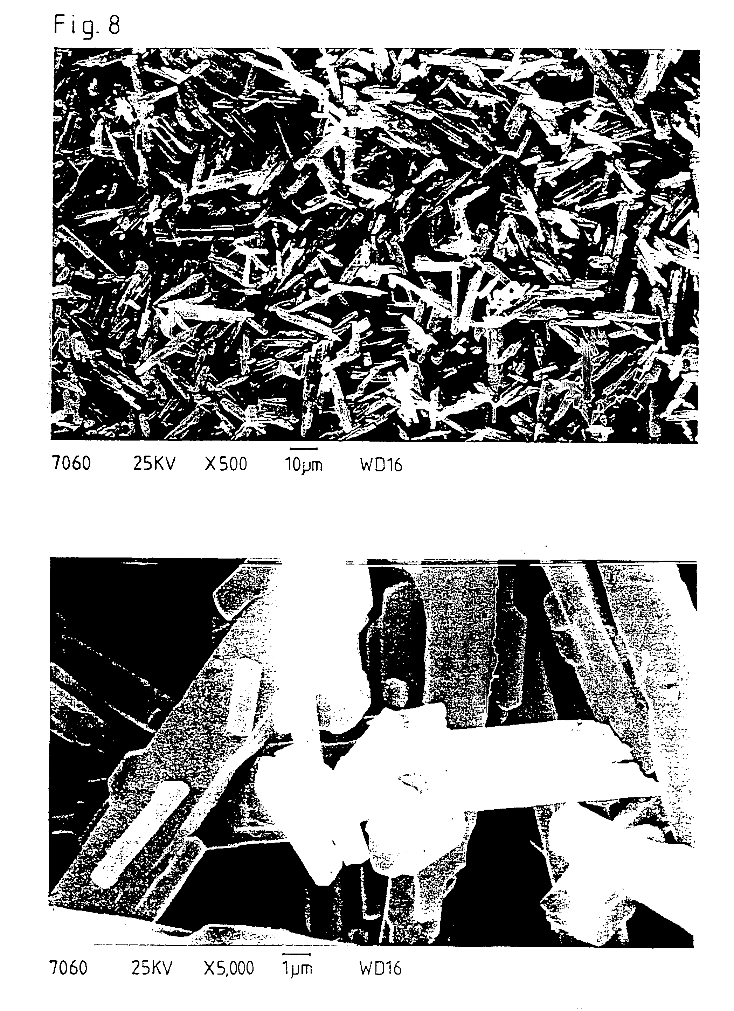

Die REM-Aufnahme (Fig. 8) zeigt einheitliche nadelförmige Kristalle von 10 - 20 µm Länge und ca. 2 µm Dicke.

### Beispiel 10

### Umsetzung von sphäroidisch agglomeriertem basischen Kobalt(II)carbonat mit Essigsäure

20 g basischen Kobalt(II)carbonates aus Beispiel 1 wurden in 600 ml Wasser in einem 1-1-Kolben mit Rückflußkühler unter Argon aufgeschlämmt und mit 30 ml Eisessig versetzt. Anschließend wurde die Mischung unter Rühren langsam erwärmt. Bereits bei gelinder Erwärmung war der Beginn der Reaktion an der einsetzenden CO₂-Entwicklung zu erkennen.

Die Reaktion verlief wesentlich heftiger als bei der Umsetzung in unverdünntem Eisessig, gemäß Beispiel 9. Die Temperatur wurde vorsichtig auf 80 °C erhöht. Nach 0,5 h hatte sich eine klare, rote Kobalt(II)acetat-Lösung gebildet.

### Beispiel 11

### Umsetzung von sphäroidisch agglomeriertem basischen Kobalt(II)carbonat mit Phosphorsäure

200 g basischen Kobalt(II)carbonates aus Beispiel 1 wurden in 1 l Wasser suspendiert.

Die Mischung wurde auf 60 °C erwärmt und unter Rühren innerhalb von 1,5 h mit 140 g H₃PO₄ (85 Gew.-%), gelöst in 1 l Wasser, versetzt. Anschließend wurde noch 0,5 h bei Reaktionstemperatur weitergerührt, dann über eine Filternutsche filtriert und das erhaltene Produkt mit 500 ml Wasser nachgewaschen.

Nach Trocknen des Filterkuchens bis zur Gewichtskonstanz bei 80 °C erhielt man 307 g eines rosafarbenen, nach leicht durchzuführender Deagglomeration, fließfähigen Produkts. Der Kobaltgehalt wurde zu 35,7 Gew.-% bestimmt. Die Röntgenbeugungsanalyse zeigt das Beugungsspektrum des phasenreinen Kobalt(II)phosphat-octahydrats.

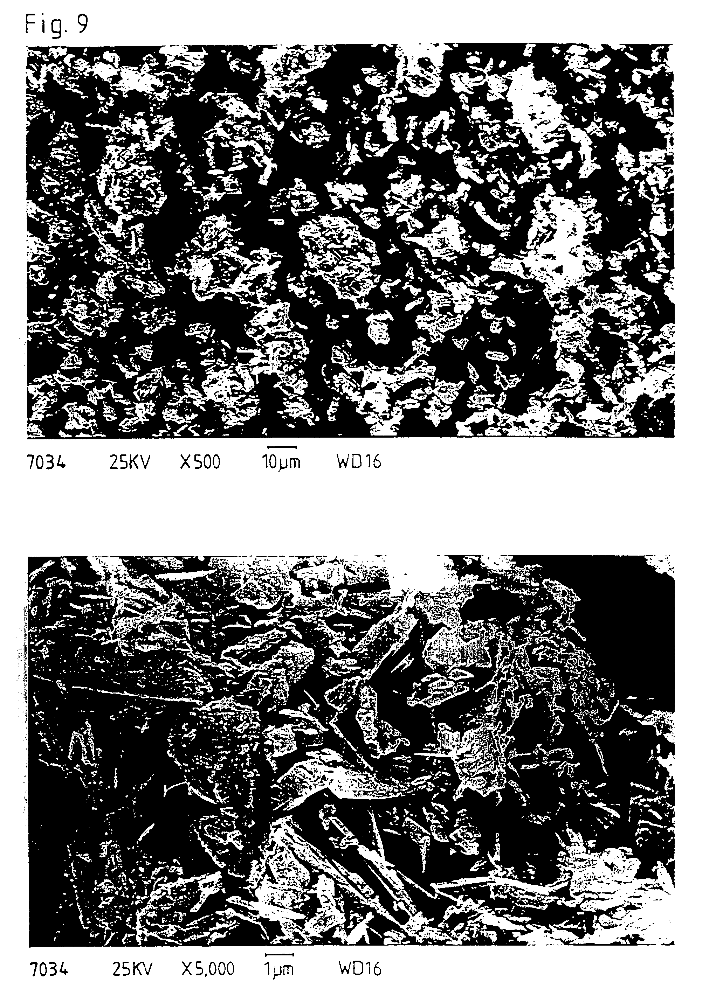

Aus der REM-Aufnahme (Fig. 9) ist zu erkennen, daß die agglomerierte Sekundärmorphologie des Ausgangsmaterials weitgehend erhalten blieb.

### Beispiel 12

### Umsetzung von sphäroidisch agglomeriertem basischen Kobalt(II)carbonat mit Oxalsäure

200 g basischen Kobalt(II)carbonates aus Beispiel 1 wurden in 1 l Wasser suspendiert.

Die Mischung wurde auf 70 °C erwärmt und unter Rühren innerhalb von 2 h mit 266 g Oxalsäure-dihydrat, gelöst in 2 1 Wasser, versetzt.

Nach Beendigung der Zugabe wurde noch 1 h bei Reaktionstemperatur weitergerührt, über eine Filternutsche filtriert und mit 500 ml Wasser nachgewaschen. Nach Trocknen des Filterkuchens bis zur Gewichtskonstanz bei 80 °C erhielt man 350 g Kobalt(II)oxalat-dihydrats. Der Kobaltgehalt wurde zu 30,9 Gew.-% bestimmt.

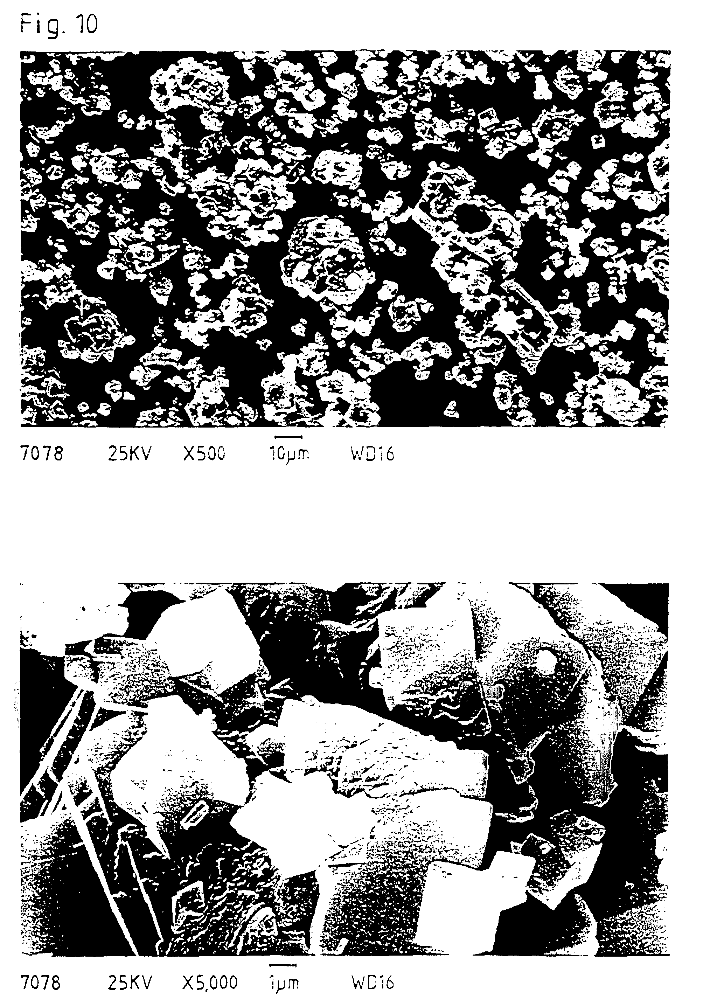

Die agglomerierte Sekundärmorphologie des Ausgangsmaterials blieb erhalten (Fig. 10).

## Patentansprüche

1. Aus feinen Primärteilchen agglomeriertes basisches Kobalt(II)carbonat der allgemeinen Zusammensetzung Co[(OH)₂]ₐ[CO₃]₁₋ₐ mit 0,1 ≤ a ≤ 0,9, dadurch gekennzeichnet, daß die Agglomerate einen sphäroidischen Habitus aufweisen, wobei der mittlere Agglomeratdurchmesser 3 bis 50 µm beträgt.

2. Basische Kobalt(II)carbonat-Agglomerate gemäß Anspruch 1, dadurch gekennzeichnet, daß der Agglomeratdurchmesser 5 bis 20 µm beträgt.

3. Basische Kobalt(II)carbonat-Agglomerate gemäß einem der Ansprüche 1 oder 2, dadurch gekennzeichnet, daß sie Klopfdichten von ≥ 1,6 g/cm³ und Schüttdichten von > 1,2 g/cm³ aufweisen.

4. Verfahren zur Herstellung basischer Kobalt(II)carbonat-Agglomerate gemäß einem oder mehreren der Ansprüche 1 bis 3, dadurch gekennzeichnet, daß wäßrige Lösungen von Kobaltsalzen der allgemeinen Formel CoX₂, wobei X = Cl⁻, NO₃⁻ und/oder ½ SO₄²⁻ bedeutet, mit wäßrigen Lösungen oder Suspensionen von Alkali- und/oder Ammoniumcarbonaten und/oder Hydrogencarbonaten bei Temperaturen zwischen 40 und 100 °C, vorzugsweise 60 bis 90 °C, umgesetzt und die entstehenden basischen Kobaltcarbonat-Agglomerate anschließend abfiltriert und neutralsalzfrei gewaschen werden.

5. Verfahren zur Herstellung von agglomeriertem Kobalt(II)hydroxid, dadurch gekennzeichnet, daß basische Kobalt(II)carbonat-Agglomerate gemäß einem oder mehreren der Ansprüche 1 bis 4 mit wäßrigen Alkalilaugen und/oder Ammoniak in Suspension umgesetzt werden.

6. Kobalt(II)hydroxid, erhältlich gemäß einem oder mehreren der Ansprüche 4 oder 5, dadurch gekennzeichnet, daß sie aus sphäroidisch agglomerierten, kantigen, plättchenförmigen Primärteilchen bestehen, die durchschnittliche Durchmesser von 0,3 bis 1,5 µm und Durchmesser-zu Stärke-Verhältnisse zwischen 3 und 15 aufweisen.

7. Kobalt(II)hydroxid gemäß Anspruch 6, dadurch gekennzeichnet, daß die sphäroidischen Agglomerate einen mittleren Durchmesser von 3 - 50 µm, vorzugsweise 5 - 20 µm aufweisen.

8. Kobalt(II)hydroxid gemäß einem der Ansprüche 6 oder 7, dadurch gekennzeichnet, daß es Klopfdichten von ≥ 1g/cm³ aufweist.

9. Verwendung der basischen Kobalt(II)carbonat-Agglomerate gemäß einem oder mehreren der Ansprüche 1 bis 4 zur Herstellung von sphäroidischem, fließfähigem Kobalt(II)oxid sowie höherer Oxide.

10. Verwendung der basischen Kobalt(II)carbonat-Agglomerate gemäß einem oder mehreren der Ansprüche 1 bis 4 zur Herstellung von reinen Kobalt(II)salzen für den Einsatz in der Katalysatortechnik oder bei Haftvermittlern.

11. Verwendung von Kobalt(II)hydroxiden gemäß einem oder mehreren der Ansprüche 5 bis 8 als Komponenten der Nickelhydroxidelektrode in alkalischen Sekundärzellen.

12. Verwendung von Kobalt(II)hydroxid gemäß einem oder mehreren der Ansprüche 5 bis 8 zur Herstellung von reinen Kobalt(II)-Salzen für den Einsatz in Haftvermittlern und Katalysatoren.

13. Verwendung von Kobalt(II)hydroxid gemäß einem oder mehreren der Ansprüche 5 bis 8 zur Herstellung von sphäroidischem, fließfähigen Kobalt(II)oxid oder höherer Oxide durch Kalzination.

14. Verwendung von basischen Kobalt(II)carbonat-Agglomeraten gemäß einem oder mehreren der Ansprüche 1 bis 4 und/oder Kobalt(II)hydroxid gemäß einem oder mehreren der Ansprüche 5 bis 8 zur Herstellung von Kobaltpigmenten.

## Claims

1. Basic cobalt(II) carbonate, agglomerated from fine primary particles and of general composition Co[(OH)₂]ₐ[CO₃]₁₋ₐ, where 0,1 ≤ a ≤ 0.9, characterised in that the agglomerates have a spheroidal habit and the average agglomerate diameter is 3 to 50 µm.

2. Basic cobalt(II) carbonate agglomerates according to claim 1, characterised in that the agglomerate diameter is 5 - 20 µm.

3. Basic cobalt(II) carbonate agglomerates according to either one of claims 1 or 2, characterised in that they have tap densities of ≥ 1.6 g/cm³ and bulk densities of ≥ 1.2 g/cm³.

4. A process for producing basic cobalt(II) carbonate agglomerates according to one or more of claims 1 to 3, characterised in that aqueous solutions of cobalt salts of general formula CoX₂, where X represents Cl⁻, NO₃⁻ and/or ½ SO₄²⁻, are reacted with aqueous solutions or suspensions of alkali and/or ammonium carbonates and/or hydrogen carbonates at temperatures between 40 and 100°C, preferably 60 to 90°C, and the resulting basic cobalt carbonate agglomerates are subsequently filtered off and washed until they are neutral and free from salts.

5. A process for producing agglomerated cobalt(II) hydroxide, characterised in that basic cobalt(II) carbonate agglomerates according to one or more of claims 1 to 4 are reacted in suspension with aqueous alkaline liquors and/or ammonia.

6. Cobalt(II) hydroxide, obtainable according to one or more of claims 4 or 5, characterised in that it consists of spheroidally agglomerated, polygonal, lamellar primary particles which have average diameters of 0.3 mm to 1.5 µm and diameter to thickness ratios between 3 and 15.

7. Cobalt(II) hydroxide according to claim 6 characterised in that the spheroidal agglomerates have an average diameter of 3 - 50 µm, preferably 5 - 20 µm.

8. Cobalt(II) hydroxide according to either one of claims 6 or 7, characterised in that it has tap densities of ≥ 1 g/cm³.

9. Use of the basic cobalt(II) carbonate agglomerates according to one or more of claims 1 to 4 for the production of spheroidal, free-flowing cobalt(II) oxide and higher oxides.

10. Use of the basic cobalt(II) carbonate agglomerates according to one or more of claims 1 to 4 for the production of pure cobalt(II) salts for use in catalyst technology or in bonding agents.

11. Use of cobalt(II) hydroxides according to one or more of claims 5 to 8 as components of the nickel oxide electrode in alkaline secondary cells.

12. Use of cobalt(II) hydroxide according to one or more of claims 5 to 8 for the production of pure cobalt(II) salts for use in bonding agents and catalysts.

13. Use of cobalt(II) hydroxide according to one or more of claims 5 to 8 for the production of spheroidal, free-flowing cobalt(II) oxide or higher oxides by calcination.

14. Use of basic cobalt(II) carbonate agglomerates according to one or more of claims 1 to 4 and/or cobalt(II) hydroxide according to one or more of claims 5 to 8 for the production of cobalt pigments.

## Revendications

1. Carbonate basique de cobalt-II à l'état d'agglomérats de particules primaires fines, de composition générale Co[(OH)₂]ₐ[CO₃]₁₋ₐ avec 0,1 ≤ a ≤ 0,9, caractérisé en ce que les agglomérats ont un habitus sphéroïdique et un diamètre moyen de 3 à 50 µm.

2. Agglomérats de carbonate basique de cobalt-II selon la revendication 1, caractérisés en ce qu'ils ont un diamètre de 5 à 20 µm.

3. Agglomérats de carbonate basique de cobalt-II selon l'une des revendications 1 ou 2, caractérisés en ce que leur densité à l'état tassé est supérieure ou égale à 1,6g/cm³ et à l'état non tassé supérieure ou égale à 1,2 g/cm³.

4. Procédé de préparation d'agglomérats de carbonate basique de cobalt-II selon une ou plusieurs des revendications 1 à 3, caractérisé en ce que l'on fait réagir des solutions aqueuses de sels de cobalt de formule générale CoX₂ dans laquelle X = Cl⁻, NO₃⁻ et/ou ½ SO₄⁻², avec des solutions ou suspensions aqueuses de carbonates et/ou bicarbonates alcalins et/ou d'ammonium à des températures de 40 à 100°C, de préférence de 60 à 90°C, ce qui donne des agglomérats de carbonate de cobalt basique qu'on filtre et qu'on lave jusqu'à élimination des sels neutres.

5. Procédé de préparation d'un hydroxyde de cobalt-II aggloméré, caractérisé en ce que l'on fait réagir des agglomérats de carbonate basique de cobalt-II selon une ou plusieurs des revendications 1 à 4 en suspension avec des lessives aqueuses alcalines et/ou l'ammoniac.

6. Hydroxyde de cobalt-II obtenu selon une ou plusieurs des revendications 4 ou 5, caractérisé en ce qu'il consiste en particules primaires en forme de tablettes à arêtes vives agglomérées, à l'état d'agglomérats sphéroïdiques, et qui ont des diamètres moyens de 0,3 à 1,5 µm et des rapports diamètre/épaisseur de 3 à 15.

7. Hydroxyde de cobalt-II selon la revendication 6, caractérisé en ce que les agglomérats sphéroïdiques ont un diamètre moyen de 3 à 50 µm, de préférence de 5 à 20 µm.

8. Hydroxyde de cobalt-II selon une des revendications 6 ou 7, caractérisé en ce qu'il a une densité à l'état tassé supérieure ou égale à 1 g/cm³.

9. Utilisation des agglomérats de carbonate basique de cobalt-II selon une ou plusieurs des revendications 1 à 4 pour la préparation d'un oxyde de cobalt-II ou d'oxydes supérieurs sphéroïdiques et qui s'écoulent bien.

10. Utilisation des agglomérats de carbonate basique de cobalt-II selon une ou plusieurs des revendications 1 à 4 pour la préparation de sels de cobalt-II purs destinés à être utilisés dans des catalyseurs ou des agents d'adhérence.

11. Utilisation d'hydroxydes de cobalt-II selon une ou plusieurs des revendications 5 à 8 en tant que composants des électrodes à hydroxyde de nickel dans des cellules secondaires alcalines.

12. Utilisation d'un hydroxyde de cobalt-II selon une ou plusieurs des revendications 5 à 8 pour la préparation de sels de cobalt-II purs destinés à être utilisés dans des agents d'adhérence et des catalyseurs.

13. Utilisation d'un hydroxyde de cobalt-II selon une ou plusieurs des revendications 5 à 8 pour la préparation d'un oxyde de cobalt-II ou d'oxydes supérieurs sphéroïdiques, s'écoulant librement, par calcination.

14. Utilisation des agglomérats de carbonate basique de cobalt-II selon une ou plusieurs des revendications 1 à 4 et/ou de l'hydroxyde de cobalt-II selon une ou plusieurs des revendications 5 à 8 pour la préparation de pigments de cobalt.
